# EUROPEAN PATENT SPECIFICATION

(11) **EP 1 484 425 B1**
(45) Date of publication and mention of the grant of the patent: **09.09.2009**
(21) Application number: 03710263.9
(22) Date of filing: 06.03.2003
(51) Int. Cl.: C22F 1/04, C22C 21/00

(54) **METHOD FOR PRODUCING ALUMINUM ALLOY COMPOSITE MATERIAL FOR HEAT EXCHANGER**
VERFAHREN ZUR HERSTELLUNG EINES ALUMINIUMLEGIERUNGSVERBUNDWERKSTOFFS FÜR WÄRMETAUSCHER
PROCEDE DE PRODUCTION D'UN MATERIAU COMPOSITE EN ALLIAGE D'ALUMINIUM POUR UN ECHANGEUR THERMIQUE

(30) Priority: 08.03.2002 JP 2002064398
(43) Date of publication of application: 08.12.2004
(73) Proprietor: Furukawa-Sky Aluminum Corporation, Chiyoda-ku Tokyo (JP)
(72) Inventor: Tanaka, Satoshi,c/o Furukawa-Sky Aluminum Corp, Tokyo 130-0013 (JP); Yanagawa, Yutaka, Furukawa-Sky Aluminum Corp, Tokyo 130-0013 (JP); Doko, Takeyoshi, Furukawa-Sky Aluminum Corp, Tokyo 130-0013 (JP)
(74) Representative: Forstmeyer, Dietmar
(86) International application number: PCT/JP2003/002652
(87) International publication number: WO 2003/076677

(56) References cited:
- JP-A- 2 034 296
- JP-A- 3 281 761
- JP-A- 63 195 240
- US-A- 4 649 087
- US-A- 4 761 267
- US-A- 5 476 725
- US-A- 5 669 436
- PATENT ABSTRACTS OF JAPAN vol. 010, no. 257 (M-513), 3 September 1986 (1986-09-03) -& JP 61 082992 A (FURUKAWA ALUM CO LTD; others: 01), 26 April 1986 (1986-04-26)
- PATENT ABSTRACTS OF JAPAN vol. 015, no. 398 (C-0874), 9 October 1991 (1991-10-09) -& JP 03 162543 A (TOYO RADIATOR CO LTD; others: 01), 12 July 1991 (1991-07-12)
- 50 SHUNEN KINEN JIGYO JIKKO IINKAI KINEN SHUPPAN BUKAI: 'Aluminium no seihin to seizo gijutsu' THE JAPAN INSTITUTE OF LIGHT METALS 31 October 2001, pages 187 - 190, XP002969575

## Description

### TECHNICAL FIELD

The present invention relates to a method for producing an aluminum alloy composite material for a heat exchanger.

### BACKGROUND ART

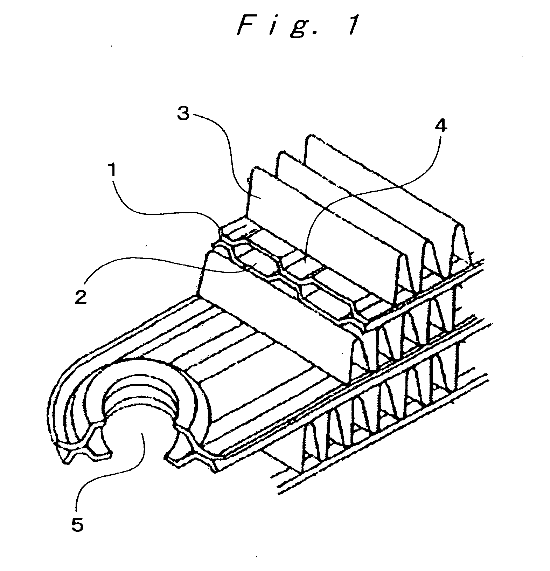

In general, cores of heat exchangers, such as evaporators and condensers, are manufactured, for example, as shown in Fig. 1, by steps comprising: press-forming a composite material (brazing sheet), which is made up from an aluminum alloy core alloy being clad with a filler alloy on its both surfaces, to form corrugation; stacking the corrugated two sheets of refrigerant passage-forming members 1, to form refrigerant passageways 2 in the longitudinal direction; and then brazing these sheets. In the figure, reference numeral 3 denotes a corrugated fin; reference numeral 4 denotes a brazed joint (flat portion), and reference numeral 5 denotes a refrigerant passageway running in the vertical direction. Since the sheet thickness of the material has been reduced in recent years, to meet the need for lightweight materials, the aluminum member of a heat exchanger for forming a refrigerant passageway 2 is strongly required to be improved in mechanical strength, corrosion resistance, and brazeability.

Heat for brazing induces diffusion of the filler alloy into the aluminum alloy core alloy of the aluminum composite material being used as a brazing sheet for forming the above refrigerator passageway, in which the filler alloy penetrates into the core alloy. Since diffusion of the filler alloy results in a decreased amount of the filler alloy to be supplied to the portion to be brazed, defective brazing, such as discontinuous brazing in a brazed portion (defect owing to insufficient supply of filler alloy) and decrease of pressure resistance of a heat exchanger, may occur. In addition, the strength and corrosion resistance that the core alloy inherently possesses are largely decreased at the diffusion area of the filler alloy into the core alloy, and the performance of the heat exchanger after heating for brazing is considerably decreased.

To suppress such diffusion of the filler alloy, there is a method of applying a prestrain of 1 to 5% to a rolled material of an Al-Mn-based alloy, to which an appropriate amount of Cu and Fe are added, to permit the alloy to properly recrystallize by heating in the brazing process. However, in this case, such a problem arises as formability of the resulting alloy is decreased due to work hardening caused by applying a strain, and cracks are occurred in the forming process. Therefore, such countermeasures are far from satisfactory.

US-A-4,649,087 discloses a corrosion resistant, aluminum brazing sheet. US-A-5,476,725 describes a clad metallurgical product and a method of manufacture thereof. US-A-5,669.436 discloses a method of continuously casting a composite strip including an aluminum alloy core. US-A-4,761,267 discloses an aluminum alloy for use as core of a clad material. Moreover, aluminum alloy brazing sheets are also disclosed in JP-A-61-082992, JP-A-03-162543, JP-A-02-034296, JP-A-03-281761, and JP-A-63-195240.

### DISCLOSURE OF THE INVENTION

The present invention resides in a method for producing an aluminum alloy composite material for a heat exchanger, which comprises the steps of: homogenizing an aluminum alloy core alloy by keeping the core alloy at 530°C or more for 15 hours or more; fitting an Al-Si-series filler alloy on one side or on both sides of the core alloy; hot rolling the resultant fitted alloys; cold rolling the hot rolled fitted alloys; subjecting the cold rolled fitted alloys to an intermediate annealing so as to completely recrystallize the core alloy; and giving a strain of 1 to 10% to the resultant alloys, wherein the aluminum alloy core alloy comprises 0.01 to 1.0% by mass (abbreviated to as % hereinafter) of Si, 0.1 to 2.0% of Fe, 0.1 to 2.0% of Cu, 0.5 to 2.0% of Mn, and less than 0.2% (including 0%) of Ti, with the balance being Al and inevitable impurities.

Further, the present invention resides in an aluminum alloy composite material for a heat exchanger, which is produced by the above production method.

Other and further features and advantages of the present invention will appear more fully from the following description, taken in connection with the accompanying drawing.

### BRIEF DESCRIPTION OF DRAWING

Fig. 1 is a partial perspective view for explaining an automobile heat exchanger (radiator).

### BEST MODE FOR CARRYING OUT THE INVENTION

According to the present invention, there is provided the following means:
(1) A method for producing an aluminum alloy composite material for a heat exchanger, comprising the steps of: homogenizing an aluminum alloy core alloy by keeping the core alloy at 530°C or more for 15 hours or more; fitting an Al-Si-series filler alloy on one side or on both sides of the core alloy; hot rolling the resultant fitted alloys; cold rolling the hot rolled fitted alloys; subjecting the cold rolled fitted alloys to an intermediate annealing so as to completely recrystallize the core alloy; and giving a strain of 1 to 10% to the resultant alloys, wherein the aluminum alloy core alloy comprises 0.01 to 1.0% by mass (abbreviated to as % hereinafter) of Si, 0.1 to 2.0% of Fe, 0.1 to 2.0% of Cu, 0.5 to 2.0% of Mn, and less than 0.2% (including 0%) of Ti, with the balance being Al and inevitable impurities.
(2) The method according to item (1), wherein the homogenizing step comprises keeping the core alloy at 530°C or more for 2 hours or more, followed by cooling, in which the core alloy is kept for 1 hour or more at 500 to 560°C in the course of the cooling, instead of keeping the core alloy at 530°C or more for 15 hours or more.
(3) The method according to item (1) or (2), wherein the intermediate annealing comprises keeping the cold rolled fitted alloys at 320 to 450°C for 1 hour or more.
(4) The method according to item (1) or (2), wherein the intermediate annealing comprises: heating the cold rolled fitted alloys at a heating speed of 30°C/minute or more; keeping said fitted alloys at 300 to 550°C for 1 to 180 seconds; and then cooling the resultant alloys at a cooling speed of 30°C/minute or more.
(5) The method according to any one of items (1) to (4), further comprising a step of heat-treating (final annealing) after the step of giving the strain of 1 to 10%.
(6) The method according to item (5), wherein said heat-treating after giving the strain of 1 to 10% comprises keeping at 200 to 380°C for 1 hour or more.
(7) The method according to item (5), wherein said heat-treating after giving the strain of 1 to 10% comprises the steps of: heating at a heating speed of 30°C/minute or more; keeping at 250 to 420°C for 1 to 180 seconds; and then cooling at a cooling speed of 30°C/minute or more.

The present invention is further described hereinafter.

The inventors have made intensive studies for developing a material capable of preventing the filler alloy from penetrating into the core alloy or the like while being excellent in formability, and have obtained the following findings. The filler alloy is suppressed from penetrating into the core alloy by homogenizing a core alloy that is an Al-Mn-based alloy, to which a proper amount of Cu and Fe are added, by giving a prestrain to the material subjected to a rolling after fitting the filler alloy on the core alloy, and by applying a predetermined heat treatment, if necessary. The inventors have completed the present invention by finding that formability can be improved while maintaining corrosion resistance and strength by the treatments above.

The alloying elements which constitute the core alloy for use in the method of the present invention will be described first.

The content of Si is 0.01 to 1.0% by mass (abbreviated to as % hereinafter), since Si suppresses the filler alloy from being diffused while increasing the amount of the filler alloy to form fillets, and has a function for enhancing the strength of the material after brazing. The effect of Si is not exhibited at the amount below the lower limit described above, and a melting phenomenon called as burning may be caused at a brazing temperature when the content of Si exceeds the upper limit described above. The preferable content of Si is in the range from 0.1 to 0.6%.

Fe and Cu are effective for improving the strength and for enhancing recrystallization. During heating for brazing, these elements suppress the filler alloy from penetrating into a core alloy, by completing the recrystallization before the filler alloy starts penetration.

The content of Fe is limited in the range from 0.1 to 2.0%, because the effect of Fe is not sufficiently manifested when the content is less than the lower limit above, while corrosion resistance decreases when the content exceeds the upper limit above. The preferable range of the content of Fe is 0.1 to 1.1%, more preferably 0.2 to 0.8%.

The content of Cu is limited in the range from 0.1 to 2.0%, because the effect of Cu cannot be sufficiently manifested when the content is below the lower limit above, while the base material (matrix) may be melted when the content exceeds the upper limit above. The preferable range of the content of Cu is from 0.1 to 1.1%, more preferably from 0.2 to 0.8%.

While Cu has an action of enhancing penetration of the filler alloy, this action is suppressed by adding Fe together with Cu.

Mn is responsible for improving the strength by forming a solid solution with the aluminum matrix in the brazing step. The content of Mn is limited in the range from 0.5 to 2.0% because the effect of adding Mn is not sufficiently manifested when the content is less than 0.5%, while rolling processibility and formability decrease when the content exceeds 2.0%. Particularly preferable range of the content of Mn is from 0.9 to 1.6%.

Ti is responsible for improving the corrosion resistance. The content is limited to less than 0.2% (including 0%) because recrystallization of the core alloy (aluminum alloy) is suppressed in the brazing step when the content is 0.2% or more.

In the method of the present invention, the balance of the core alloy except the alloying elements described above is aluminum and inevitable impurities. The kind and content of the inevitable impurities are not particularly limited so long as they do not inhibit the effect of the present invention.

Next, the reason for limiting the condition of the homogenization treatment in the method of the present invention will be described.

Diffusion of the filler alloy into the core alloy occurring by heating for brazing will advance along crystal grain boundaries or pseudo-crystal grain boundaries in the core alloy when the filler alloy is melted. When the brazing sheet is the material that is completely annealed, the core alloy is not recrystallized by heating for brazing. Therefore, the filler alloy is diffused along the crystal grain boundaries in the core alloy. Accordingly, the filler alloy will be more readily diffused as the crystal grains of the core alloy are finer, and the degree of diffusion of the filler alloy may be readily predicted.

On the other hand, when the core alloy is strained by forming the brazing sheet, the core alloy will be partially recrystallized by heating during the brazing step due to the presence of the recrystallized grain boundaries or pseudo-crystal grain boundaries. Since recrystallization behavior at this stage is affected by the distribution of precipitates in the core alloy, different distributions of the precipitates will bring various states of diffusion of filler alloy, which causes variations in characteristics such as the strength and corrosion resistance after heating for brazing. Accordingly, it is effective to sufficiently homogenize the core alloy and stabilize the distribution of the precipitates in order to reduce the variation in states of diffusion of the filler alloy.

Preferably, as the homogenization condition, the core alloy is homogenized by keeping it at 530°C or more for 15 hours or more, so as to stabilize the structure of the core alloy by forming a solid solution of the precipitates formed in the cooling process at casting. However, the upper limit of the homogenizing temperature should be controlled within a range not melting the core alloy. With respect to the lower limit of the homogenizing time, a solid solution of the precipitates may not be sufficiently formed when the homogenizing time is shorter than the time as described above, which may be a cause of arising diffusion of the filler alloy in the brazing step. While the upper limit of the homogenizing time is not particularly limited so long as the homogenizing time is controlled so as not to cause melting of the core alloy, the time is preferably selected within an economically acceptable range. The keeping time for the above homogenization treatment is counted from the time when the temperature of the aluminum alloy core alloy exceeds 530°C by heating to the time when the temperature of the aluminum alloy core alloy is lowered to 530°C or less by cooling.

Further for obtaining a material exhibiting less diffusion of the filler alloy, the following homogenization treatment conditions are effective. The core alloy is kept at 530°C or more for 2 hours or more, preferably for 15 hours or more, and more preferably the core alloy is kept at a temperature in the range of from 570 to 620°C for 2 hours or more and then subjected to a cooling step, during which the core alloy is kept at a temperature in the range of from 500 to 560°C for 1 hour or more. The precipitates in the core alloy are enhanced to form a solid solution at 530°C or more, preferably at 570 to 620°C, and precipitation is enhanced by keeping at 500 to 560°C during the cooling step. Thus the structure of the core alloy is more stabilized and enables the filler alloy to be suppressed from diffusing during heating for brazing.

Since the composite material obtained by the method of the present invention as a material for a heat exchanger is required good formability before brazing, the core alloy should be completely recrystallized in the intermediate annealing step. Therefore, the intermediate annealing condition is such that preferably keeping at 320 to 450°C for 1 hour or more. When the annealing temperature is too low or the annealing time is too short in the intermediate annealing step, the core alloy may be insufficiently recrystallized. An annealing temperature of exceeding 450°C is economically disadvantageous and may allow crystal grains to grow into coarse (giant) particles to decrease formability.

For further improving formability, the preferable intermediate annealing condition is that the core alloy is heated at a heating speed of 30 °C/minute or more, kept at a temperature in the range of from 300 to 550°C for 1 to 180 seconds, and then is cooled at a cooling speed of 30 °C/minute or more. This process enables the formability to be ensured, since the recrystallized grain size of the aluminum alloy material for the core alloy becomes more uniform and finer. It is not preferable that either the heating speed or the cooling speed is too slow, the keeping temperature is too high, or the keeping time is too long, since the crystal grains of the aluminum alloy material become too coarse. Keeping the temperature too low or keeping the time too short is also not preferable since recrystallization during the annealing process becomes insufficient.

When a brazing sheet that is composed of a completely recrystallized core alloy is subjected to forming, unstable diffusion of the filler alloy arises at a portion being given a specific degree of work strain. It was confirmed that the amount of strain causing the above-stated diffusion of the filler alloy is in the range of from 0 to less than 1%, in the case of the core alloy composed of the Al-Mn-based alloy. On the other hand, heating the core alloy having an amount of strain of 1% or more for brazing does not result in diffusion of the filler alloy during the brazing process, since the recrystallization of the core alloy is completed in a low temperature region before the filler alloy is melted. Accordingly, a composite material exhibiting a small degree of diffusion in the later processes of forming and heating for brazing may be obtained by giving beforehand the brazing sheet a work prestrain of 1% or more that is larger than the amount of strain causing diffusion of the filler alloy in a brazing sheet. Diffusion occurs at a portion having a low degree of work strain when the given strain is less than 1%. On the other hand, given strain of exceeding 10% is not preferable, since formability of the material decreases.

Besides, among heat exchangers, some are severely required to have excellent formability, as is the plate material for an evaporator. In order to comply with such usage, a heat treatment (final annealing) may be applied, if necessary, after giving the strain as described above. Heat treatment after giving a strain is not necessarily required particularly when a given strain is 1 to 3%. However, when no heat treatment is applied after giving a strain, it is preferable in the intermediate annealing step to heat at a heating speed of 30 °C/minute or more and to cool at a cooling speed of 30 °C/minute or more after keeping a temperature of 300 to 550°C for 1 to 180 seconds. On the other hand, when the given strain is 3 to 10%, it is particularly preferable to apply a heat treatment after giving a strain.

Regarding a specific heat-treatment condition after giving a strain, a heat-treatment that a brazing sheet is heat-treated at 200 to 380°C by keeping the temperature for 1 hour or more, or a heat-treatment that a brazing sheet is heated at a heating speed of 30 °C/minute or more, kept at a temperature of 250 to 420°C for 1 to 180 seconds and then cooled at a cooling speed of 30 °C/minute or more, or the like, is preferable for improving the performance of formability. Improvement of formability may not be remarkable under a heat-treatment condition out of the range as described above.

Kinds of filler alloys for use in the method of the present invention are not particularly limited as far as Al-Si-series filler alloys are used. Various kinds of known filler alloys, for example, such as an alloy JIS 4045, may be used. No limitations are imposed on the cladding method of the core alloy with the filler alloy, such as a cladding atmosphere and a clad ratio. Usual methods may be appropriately used within a range not impairing the effect of the present invention.

No limitations are also imposed on hot rolling and cold rolling (for example, reduction percentage) in the present invention, so long as a prescribed thickness is attained in each production step, and usual methods may be appropriately applied.

The aluminum alloy composite material produced by the method of the present invention may be used for header plates and tanks, as well as for refrigerant passageway tubes of heat exchangers such as evaporators and radiators. Besides, the composite material obtained by the method of the present invention may also be used for heater tubes and condenser tubes or the like, and further may be used for any members, if the sheet thickness is preferably 0.6 mm or less, as the composite material to which the method of the present invention is applicable.

The aluminum alloy composite material obtained by the method of the present invention for use in heat exchangers may be used as brazing materials for braze-bonded products, to prevent the filler alloy from penetrating into the core alloy or the like, while having good formability.

The aluminum alloy composite material produced by the production method of the present invention has excellent corrosion resistance and high strength with a small degree of diffusion of the filler alloy at any degree of forming. The material is also ready for forming since decrease of formability by giving a strain may be prevented by controlling the heat-treatment condition.

Accordingly, the method of the present invention is able to exert remarkable industrial effects such as ensuring of long term reliability when being applied to heat exchanger materials.

### EXAMPLE

The present invention is described in more detail hereinafter with reference to examples and comparative examples, however the present invention is by no means limited to these examples.

An aluminum alloy for a core alloy having a composition of 0.25% of Si, 0.5% of Fe, 0.15% of Cu and 1.1% of Mn with the balance being Al, and JIS 4045 alloy for a filler alloy were cast using a casting mold, respectively. The core alloy was homogenized under a condition with a temperature and a keeping time as shown in Table 1, and was finished to a thickness of 40 mm by scalping. Regarding the filler alloy, the ingot was machined by scalping, hot rolled, and was fitted to both sides of the core alloy with a clad ratio of 10% on each side. The resultant fitted alloys were heated to 500°C, hot-rolled to a thickness of 3.5 mm, and cold rolled to form a triple layer clad material with a thickness of 0.5 mm.

The cold rolled alloys above were subjected to intermediate annealing as shown in Table 1 to prepare tempered O-materials. The core alloy was completely recrystallized by this intermediate annealing.
Prestrained materials were produced by giving strains with the reduction percentage shown in Table 1 using a tension leveler. As shown in Table 1, prestrained materials were subjected to or not subjected to a heat treatment (final annealing) after giving the strain.

First, for evaluating formability of each of the composite materials, an Erichsen test was conducted and the height (fracture height (mm)) at generating cracks in the samples was measured. A refrigerant flow passageway 1 as shown in Fig. 1 was formed by forming (degree of forming of 0 to 15%) to test formability. The results are also listed in Table 1.

One formed sheet having a shape of a refrigerant flow passageway was placed on another formed sheet having the same shape and these sheets were brazed by heating, and thus refrigerant flow passageway tubes having the refrigerant flow passageways as shown by reference numeral 2 in Fig. 1 were produced. The sheets were brazed under the condition of heating at 600°C for 5 minutes in an inert gas atmosphere after being coated with a fluoride based flux. State of diffusion of the filler alloy (penetration of the filler alloy) was observed on the cross section of the refrigerant flow passageway tube. Furthermore, corrosion test of the refrigerant flow passageway tube was conducted and the depth of corrosion pits (µm) were measured after the corrosion test. A cycle of spraying 5% aqueous NaCl solution for 4 hours (40°C, 98% RH) → drying for 4 hours (55°C, 30% RH) → damping for 4 hours (50°C, 98% RH) was repeatedly applied for 1 month in the corrosion test. The results are also shown in Table 1.

**TABLE 1**

| | Homogenization conditions | | | Intermediate annealing | | | | | |
|---|---|---|---|---|---|---|---|---|---|
| | Final temperature (°C) | Keeping time (hr) | Cooling conditions with resetting: 540°C × 2h without resetting: Slow cooling | Heating speed | Final temperature (°C) | Keeping time | Cooling speed | | |
| Example 1 | 600 | 16 | with resetting | 80°C/min | 480 | 10sec | 80°C/min | | |
| Example 2 | 600 | 16 | with resetting | 80°C/min | 480 | 10sec | 80°C/min | | |
| Example 3 | 540 | 18 | Slow cooling | 40°C/hr | 250 | 4hr | 40°C/hr | | |
| Example 4 | 540 | 18 | Slow cooling | 40°C/hr | 250 | 4hr | 40°C/hr | | |
| Example 5 | 540 | 18 | Slow cooling | 40°C/hr | 250 | 4hr | 40°C/hr | | |
| Example 6 | 540 | 18 | Slow cooling | 40°C/hr | 250 | 4hr | 40°C/hr | | |
| Example 7 | 540 | 18 | Slow cooling | 40°C/hr | 250 | 4hr | 40°C/hr | | |
| Example 8 | 540 | 18 | Slow cooling | 40°C/hr | 250 | 4hr | 40°C/hr | | |
| Example 9 | 540 | 18 | Slow cooling | 80°C/min | 480 | 10sec | 80°C/min | | |
| Example 10 | 540 | 18 | Slow cooling | 80°C/min | 480 | 10sec | 80°C/min | | |
| Example 11 | 540 | 18 | Slow cooling | 80°C/min | 480 | 10sec | 80°C/min | | |
| Example 12 | 540 | 18 | Slow cooling | 80°C/min | 480 | 10sec | 80°C/min | | |
| Example 13 | 540 | 18 | Slow cooling | 80°C/min | 480 | 10sec | 80°C/min | | |
| Example 14 | 540 | 18 | Slow cooling | 80°C/min | 480 | 10sec | 80°C/min | | |
| Example 15 | 540 | 18 | Slow cooling | 80°C/min | 480 | 10sec | 80°C/min | | |
| Example 16 | 600 | 16 | with resetting | 80°C/min | 480 | 10sec | 80°C/min | | |
| Example 17 | 600 | 16 | with resetting | 80°C/min | 480 | 10sec | 80°C/min | | |
| Example 18 | 600 | 16 | with resetting | 80°C/min | 480 | 10sec | 80°C/min | | |
| Example 19 | 600 | 16 | with resetting | 80°C/min | 480 | 10sec | 80°C/min | | |
| Example 20 | 600 | 16 | with resetting | 80°C/min | 480 | 10sec | 80°C/min | | |
| Example 21 | 600 | 16 | with resetting | 80°C/min | 480 | 10sec | 80°C/min | | |
| Example 22 | 600 | 16 | with resetting | 80°C/min | 480 | 10sec | 80°C/min | | |
| Example 23 | 600 | 16 | with resetting | 40°C/hr | 380 | 2hr | 40°C/hr | | |
| Example 24 | 600 | 16 | with resetting | 40°C/hr | 380 | 2hr | 40°C/hr | | |
| Example 25 | 600 | 16 | with resetting | 40°C/hr | 380 | 2hr | 40°C/hr | | |
| Example 26 | 600 | 16 | with resetting | 40°C/hr | 380 | 2hr | 40°C/hr | | |
| Example 27 | 600 | 3 | with resetting | 40°C/hr | 380 | 2hr | 40°C/hr | | |
| Example 28 | 600 | 3 | with resetting | 80°C/min | 480 | 10sec | 80°C/min | | |
| Comparative example 1 | 520 | 14 | Slow cooling | 120°C/hr | 400 | 2hr | 120°C/hr | | |
| Comparative example 2 | 600 | 8 | Slow cooling | 120°C/hr | 400 | 2hr | 120°C/hr | | |
| Comparative example 3 | 600 | 3 | Slow cooling | 40°C/hr | 380 | 2hr | 40°C/hr | | |
| Comparative example 4 | 600 | 16 | Slow cooling | 80°C/min | 480 | 10sec | 80°C/min | | |
| Comparative example 5 | 600 | 16 | Slow cooling | 40°C/hr | 380 | 2hr | 40°C/hr | | |

| | Amount of prestrain (%) | Final annealing conditions | | | | Penetration of filler alloy | Depth of corrosion pit after corrosion test (µm) | Erichsen test fracture height (mm) | Formability |
|---|---|---|---|---|---|---|---|---|---|
| | | Heating speed | Final temperature (°C) | Keeping time | Cooling speed | | | | |
| Example 1 | 2.0 | Without final annealing | | | | ⊚ | 64 | 8.8 | ○ |
| Example 2 | 3.0 | Without final annealing | | | | ⊚ | 61 | 8.6 | ○ |
| Example 3 | 2.0 | 80°C/min | 350 | 10sec | 80°C/min | ○ | 70 | 9.1 | ⊚ |
| Example 4 | 4.0 | 80°C/min | 350 | 10sec | 80°C/min | ○ | 68 | 9.0 | ⊚ |
| Example 5 | 8.0 | 80°C/min | 350 | 10sec | 80°C/min | ○ | 71 | 9.1 | ⊚ |
| Example 6 | 2.0 | 40°C/hr | 250 | 4hr | 40°C/hr | ○ | 71 | 9.0 | ⊚ |
| Example 7 | 4.0 | 40°C/hr | 250 | 4hr | 40°C/hr | ○ | 70 | 9.1 | ⊚ |
| Example 8 | 8.0 | 40°C/hr | 250 | 4hr | 40°C/hr | ○ | 70 | 9.1 | ⊚ |
| Example 9 | 2.0 | 40°C/hr | 250 | 4hr | 40°C/hr | ○ | 70 | 9.7 | ⊚ |
| Example 10 | 2.0 | 80°C/min | 350 | 10sec | 80°C/min | ○ | 74 | 9.4 | ⊚ |
| Example 11 | 4.0 | 40°C/hr | 250 | 4hr | 40°C/hr | ○ | 65 | 9.6 | ⊚ |
| Example 12 | 4.0 | 40°C/hr | 300 | 2hr | 40°C/hr | ○ | 69 | 9.4 | ⊚ |
| Example 13 | 4.0 | 80°C/min | 350 | 10sec | 80°C/min | ○ | 67 | 9.3 | ⊚ |
| Example 14 | 8.0 | 40°C/hr | 250 | 4hr | 40°C/hr | ○ | 64 | 9.2 | ⊚ |
| Example 15 | 8.0 | 80°C/min | 350 | 10sec | 80°C/min | ○ | 65 | 9.0 | ⊚ |
| Example 16 | 2.0 | 40°C/hr | 250 | 4hr | 40°C/hr | ⊚ | 61 | 9.9 | ⊚ |
| Example 17 | 2.0 | 80°C/min | 350 | 10sec | 80°C/min | ⊚ | 65 | 9.7 | ⊚ |
| Example 18 | 4.0 | 40°C/hr | 250 | 4hr | 40°C/hr | ⊚ | 52 | 9.7 | ⊚ |
| Example 19 | 4.0 | 40°C/hr | 300 | 2hr | 40°C/hr | ⊚ | 55 | 9.5 | ⊚ |
| Example 20 | 4.0 | 80°C/min | 350 | 10sec | 80°C/min | ⊚ | 59 | 9.5 | ⊚ |
| Example 21 | 8.0 | 40°C/hr | 250 | 4hr | 40°C/hr | ⊚ | 51 | 9.3 | ⊚ |
| Example 22 | 8.0 | 80°C/min | 350 | 10sec | 80°C/min | ⊚ | 59 | 9.2 | ⊚ |
| Example 23 | 2.0 | 40°C/hr | 250 | 4hr | 40°C/hr | ⊚ | 53 | 9.8 | ⊚ |
| Example 24 | 2.0 | 80°C/min | 350 | 10sec | 80°C/min | ⊚ | 52 | 9.6 | ⊚ |
| Example 25 | 4.0 | 40°C/hr | 250 | 4hr | 40°C/hr | ⊚ | 54 | 9.7 | ⊚ |
| Example 26 | 4.0 | 80°C/min | 350 | 10sec | 80°C/min | ⊚ | 51 | 9.5 | ⊚ |
| Example 27 | 4.0 | 80°C/min | 350 | 10sec | 80°C/min | ○ | 77 | 9.5 | ⊚ |
| Example 28 | 4.0 | 80°C/min | 350 | 10sec | 80°C/min | ○ | 75 | 9.5 | ⊚ |
| Comparative example 1 | 2.0 | Without final annealing | | | | × | Perforated | 7.5 | ○ |
| Comparative example 2 | 2.0 | Without final annealing | | | | × | Perforated | 7.4 | ○ |
| Comparative example 3 | 2.0 | Without final annealing | | | | × | 350 | 8.5 | ○ |
| Comparative example 4 | 0 | Without final annealing | | | | × | Perforated | 7.6 | ○ |
| Comparative example 5 | 11 | Without final annealing | | | | ⊚ | Generation of cracks during forming | | |

| | | | | | | | | | |
|---|---|---|---|---|---|---|---|---|---|
| Note) Penetration of filler alloy: ⊚ No penetration, ○ Slight penetration, × Penetrated Formability: ⊚ No cracks, ○ No cracks, but slightly poor in elongation | | | | | | | | | |

Table 1 shows that all the composite materials in Examples 3 to 15 were excellent in corrosion resistance with small degrees of penetration of the filler alloy and shallow corrosion pits after the corrosion test. Substantially no penetration of the filler alloy was observed and corrosion resistance of the composite materials was also excellent in the composite materials in Examples 1, 2, and 16 to 28 since the composite materials were kept at 540°C for 2 hours in the course of the cooling step in the homogenization treatment. Formability of the composite materials Nos. 3 to 28 was excellent due to final annealing after giving a strain, and no cracks by forming were found. On the other hand, in Comparative Examples 1 to 3 which were produced by applying the homogenization treatment under the conditions outside of the range defined in the method of the present invention, penetrations of the filler alloy were observed at the portions having low degree of forming, and perforating corrosion pits or very deep corrosion pits were observed after the corrosion test. Penetration of the filler alloy was observed with occurrence of perforating pits after the corrosion test in Comparative Example 4, since no strain was given in this example. Cracks were caused at a step of forming the composite material into the shape of a refrigerator flow passageway in Comparative Example 5, since the percentage of forming for giving a strain was too high as compared with that in the conditions defined in the method of the present invention.

### INDUSTRIAL APPLICABILITY

The method of the present invention is favorable as a production method of an aluminum alloy composite material for a brazed product produced by being assembled by brazing after forming. In more detail, the method is favorable for producing a material preferable, for example, as an aluminum alloy composite sheet suitable for a laminate for forming a flow passageway of a stacked-type evaporator and a stacked-type oil cooler in a heat exchanger, for a header plate of a radiator and the like

Further, the aluminum alloy composite material obtained by the method of the present invention is excellent in formability especially for a heat exchanger. During the brazing step, the amount of diffusion of the filler alloy into the core alloy is small and spread of the filler alloy is satisfactory. Thus the composite material obtained by the method of the present invention is preferable as the aluminum alloy composite material is excellent in mechanical strength, corrosion resistance and formability after brazing.

Having described our invention as related to the present embodiments, it is our intention that the invention not be limited by any of the details of the description, unless otherwise specified, but rather be construed within its scope as set out in the accompanying claims.

## Claims

1. A method for producing an aluminum alloy composite material for a heat exchanger, comprising the steps of:
homogenizing an aluminum alloy core alloy by keeping the core alloy at 530°C or more for 15 hours or more;
fitting an Al-Si-series filler alloy on one side or on both sides of the core alloy;
hot rolling the resultant fitted alloys;
cold rolling the hot rolled fitted alloys;
subjecting the cold rolled fitted alloys to an intermediate annealing so as to completely recrystallize the core alloy; and
giving a strain of 1 to 10% to the resultant alloys,
wherein the aluminum alloy core alloy comprises 0.01 to 1.0% by mass (abbreviated to as % hereinafter) of Si, 0.1 to 2.0% of Fe, 0.1 to 2.0% of Cu, 0.5 to 2.0% of Mn, and less than 0.2% (including 0%) of Ti, with the balance being Al and inevitable impurities.

2. The method according to claim 1, wherein the homogenizing step comprises keeping the core alloy at 530°C or more for 2 hours or more, followed by cooling, in which the core alloy is kept for 1 hour or more at 500 to 560°C in the course of the cooling, instead of keeping the core alloy at 530°C or more for 15 hours or more.

3. The method according to claim 1 or 2, wherein the intermediate annealing comprises keeping the cold rolled fitted alloys at 320 to 450°C for 1 hour or more.

4. The method according to claim 1 or 2, wherein the intermediate annealing comprises: heating the cold rolled fitted alloys at a heating speed of 30°C/minute or more; keeping said fitted alloys at 300 to 550°C for 1 to 180 seconds; and then cooling the resultant alloys at a cooling speed of 30°C/minute or more.

5. The method according to any one of claims 1 to 4, further comprising a step of heat-treating after the step of giving the strain of 1 to 10%.

6. The method according to claim 5, wherein said heat-treating after giving the strain of 1 to 10% comprises keeping at 200 to 380°C for 1 hour or more.

7. The method according to claim 5, wherein said heat-treating after giving the strain of 1 to 10% comprises the steps of: heating at a heating speed of 30°C/minute or more; keeping at 250 to 420°C for 1 to 180 seconds; and then cooling at a cooling speed of 30°C/minute or more.

## Patentansprüche

1. Verfahren zum Herstellen eines Aluminiumlegierungsverbundwerkstoffs für einen Wärmetauscher, umfassend die folgenden Schritte:
Homogenisieren einer Aluminiumlegierungskernlegierung, indem die Kernlegierung bei 530°C oder mehr für 15 Stunden oder mehr gehalten wird;
Anbringen einer Füllstofflegierung der Al-Si-Serien auf einer Seite oder auf beiden Seiten der Kernlegierung;
Heißwalzen der resultierenden angebrachten Legierungen;
Kaltwalzen der heißgewalzten angebrachten Legierungen;
Unterziehen der kaltgewalzten angebrachten Legierungen einem dazwischenliegenden Tempern, um so die Kernlegierung vollständig zu rekristallisieren; und
Beaufschlagen einer Beanspruchung von 1 bis 10% auf die resultierenden Legierungen,
wobei die Aluminiumlegierungskernlegierung 0,01 bis 1,0 Massen-% (im folgenden als % abgekürzt) Si, 0,1 bis 2,0% Fe, 0,1 bis 2,0% Cu, 0,5 bis 2,0% Mn, und weniger als 0,2% (einschließlich 0%) Ti umfasst, wobei der Ausgleich aus Al und unvermeidbaren Verunreinigungen besteht.

2. Verfahren nach Anspruch 1, in welchem der Homogenisierungsschritt umfasst, dass die Kernlegierung bei 530°C oder mehr für 2 Stunden oder mehr gehalten wird, gefolgt von Abkühlen, in welchem die Kernlegierung für 1 Stunde oder mehr bei 500 bis 560°C im Verlauf des Abkühlens gehalten wird, anstatt dass die Kernlegierung bei 530°C oder mehr für 15 Stunden oder mehr gehalten wird.

3. Verfahren nach Anspruch 1 oder 2, in welchem das dazwischenliegende Tempern umfasst, dass die kaltgewalzten angebrachten Legierungen bei 320 bis 450°C für 1 Stunde oder mehr gehalten werden.

4. Verfahren nach Anspruch 1 oder 2, in welchem das dazwischenliegende Tempern umfasst: Aufheizen der kaltgewalzten angebrachten Legierungen mit einer Aufheizgeschwindigkeit von 30°C/Minute oder mehr; Halten der angebrachten Legierungen bei 300 bis 550°C für 1 bis 180 Sekunden; und dann Abkühlen der resultierenden Legierungen mit einer Abkühlgeschwindigkeit von 30°C/Minute oder mehr.

5. Verfahren nach einem der Ansprüche 1 bis 4, das weiter einen Schritt der Wärmebehandlung nach dem Schritt des Beaufschlagens der Belastung von 1 bis 10% umfasst.

6. Verfahren nach Anspruch 5, in welchem die Wärmebehandlung nach Beaufschlagen der Belastung von 1 bis 10% ein Halten bei 200 bis 380°C für 1 Stunde oder mehr umfasst.

7. Verfahren nach Anspruch 5, in welchem die Wärmebehandlung nach Beaufschlagen der Belastung von 1 bis 10% die folgenden Schritte umfasst: Aufheizen mit einer Aufheizgeschwindigkeit von 30°C/Minute oder mehr; Halten bei 250 bis 420°C für 1 bis 180 Sekunden; und dann Abkühlen mit einer Abkühlgeschwindigkeit von 30°C/Minute oder mehr.

## Revendications

1. Procédé de production d'un matériau composite en alliage d'aluminium pour un échangeur thermique, comprenant les étapes consistant à :
homogénéiser un alliage de noyau en alliage d'aluminium en maintenant l'alliage de noyau à une température supérieure ou égale à 530°C pendant 15 heures ou plus ;
ajuster un alliage d'apport de série Al-Si sur un côté ou les deux côtés de l'alliage de noyau ;
laminer à chaud les alliages ajustés obtenus ;
laminer à froid les alliages ajustés laminés à chaud ;
soumettre les alliages ajustés laminés à froid à un recuit intermédiaire de manière à recristalliser entièrement l'alliage de noyau ; et
appliquer une contrainte de 1 à 10 % aux alliages obtenus,
dans lequel l'alliage de noyau en alliage d'aluminium comprend de 0,01 à 1,0 % en masse (ci-après exprimé seulement en %) de Si, 0,1 à 2,0 % de Fe, 0,1 à 2,0 % de Cu, 0,5 à 2,0 % de Mn, et moins de 0,2 % (y compris 0 %) de Ti, le solde étant formé d'Al et d'impuretés inévitables.

2. Procédé selon la revendication 1, dans lequel l'étape d'homogénéisation comprend le maintien de l'alliage de noyau à une température supérieure ou égale à 530°C pendant 2 heures ou plus, suivi d'un refroidissement, dans lequel l'alliage de noyau est maintenu pendant 1 heure ou plus à une température allant de 500 à 560°C pendant le refroidissement, au lieu du maintien de l'alliage de noyau à une température supérieure ou égale à 530 °C pendant 15 heures ou plus.

3. Procédé selon la revendication 1 ou 2, dans lequel le recuit intermédiaire comprend le maintien des alliages ajustés laminés à froid à une température allant de 320 à 450°C pendant 1 heure ou plus.

4. Procédé selon la revendication 1 ou 2, dans lequel le recuit intermédiaire comprend : le chauffage des alliages ajustés laminés à froid à une vitesse de chauffage supérieure ou égale à 30 °C/minute ; le maintien desdits alliages ajustés à une température allant de 300 à 550°C pendant 1 à 180 secondes ; et enfin le refroidissement des alliages qui en résultent à une vitesse de refroidissement supérieure ou égale à 30°C/minute.

5. Procédé selon l'une quelconque des revendications 1 à 4, comprenant en outre une étape de traitement thermique suite à l'étape consistant à appliquer une contrainte de 1 à 10 %.

6. Procédé selon la revendication 5, dans lequel ledit traitement thermique suivant l'étape consistant à appliquer une contrainte de 1 à 10 % comprend le maintien à une température allant de 200 à 380°C pendant une 1 ou plus.

7. Procédé selon la revendication 5, dans lequel ledit traitement thermique suivant l'application de la contrainte de 1 à 10 % comprend les étapes consistant à : chauffer à une vitesse de chauffage supérieure ou égale à 30°C/minute; maintenir à une température allant de 250 à 420°C pendant 1 à 180 secondes ; puis refroidir à une vitesse de refroidissement supérieure ou égale à 30°C/minute.
